# NEUE EUROPÄISCHE PATENTSCHRIFT

(11) **EP 0 854 819 B2**
(45) Veröffentlichungstag und Bekanntmachung des Hinweises auf die Entscheidung über den Einspruch: **06.05.2004**
(45) Hinweis auf die Patenterteilung: 23.06.1999
(21) Anmeldenummer: 96931036.6
(22) Anmeldetag: 06.09.1996
(51) Int. Cl.: B62J 9/00

(54) **HALTERUNG ZUM LÖSBAREN ANBRINGEN EINES BEHÄLTNISSES AN EINEM FAHRRAD**
HOLDER FOR RELEASABLY ATTACHING A CONTAINER TO A BICYCLE
SYSTEME PERMETTANT DE FIXER DE MANIERE AMOVIBLE UN RECIPIENT SUR UNE BICYCLETTE

(30) Priorität: 15.09.1995 DE 19534204
(43) Veröffentlichungstag der Anmeldung: 29.07.1998
(73) Patentinhaber: Löhr GmbH, 59199 Bönen (DE)
(72) Erfinder: LÖHR, Hans-Gerhard, D-59199 Bönen (DE)
(74) Vertreter: Fleck, Hermann-Josef, Dr.-Ing.
(86) Internationale Anmeldenummer: PCT/EP1996/003913
(87) Internationale Veröffentlichungsnummer: WO 1997/010140

(56) Entgegenhaltungen:
- EP-A- 0 477 010
- DE-A- 3 927 086
- DE-A- 4 008 211
- DE-A- 4 223 099

## Beschreibung

Die Erfindung bezieht sich auf eine Halterung zum lösbaren Anbringen eines Behältnisses an einem Fahrrad mit einem an der Lenkstange rechts und links von einem Lenkervorbau verstellbar mittels Schellen festlegbaren und an dem Lenkervorbau mittels eines Bügels abstützbaren Trägerstück , an dem die Schellen mit ihren freien Enden einsetzbar und verspannbar sind, mit einem mit dem Bügel starr verbundenen Bogenstück, das eine Außenzahnung besitzt, mittels der der Bügel im gelockerten Zustand der Schellen an einer Innenzahnung relativ zu dem Trägerstück verstellbar und im festgezogenen Zustand der Schellen unverstellbar festgelegt ist, und mit einem an dem Trägerstück lösbar ankoppelbaren, an dem Behältnis befestigten oder befestigbaren Haltestück.

Bei einer derartigen, in der DE 40 08 211 A1 angegebenen Halterung, untergreift ein Bügel mit einer Brücke den Lenkvorbau und verhindert ein Verschwenken eines Trägerstücks, über das ein Behältnis angekoppelt wird. Die Brücke ist beidseitig mit seitlichen Streben verbunden, an die jeweils ein zwischen der Lenkstange und einer Schelle festgelegter Ringbund angeschlossen ist, der ein Bogenstück mit einer dem Trägerstück zugekehrten Außenzahnung mit wenigen Zähnen aufweist. Auf der diesem Bogenstück zugekehrten Innenseite des Trägerstücks ist eine mit der Außenzahnung zusammenwirkende Innenzahnung vorgesehen, die mit der Außenzahnung zusammenwirkt, wodurch eine Änderung der Winkellage des Bügels bezüglich des Trägerstücks ermöglicht wird. Hierbei können sich Stabilitätsprobleme bei der Abstützung ergeben.

Bei einer weiteren Halterung gemäß der EP 0 477 010 A1 ist eine T-förmige Verdrehsicherung auf der Oberseite des nach vorne ragenden Abschnitts des Lenkervorbaus mittels einer Schelle und auf der Lenkstange mittels zweier weiterer Schellen festgelegt, die auch einen T-förmigen Abschnitt eines Trägerstücks umschließen. Das T-Dach der Verdrehsicherung weist an seinen Enden eine Außenzahnung auf, während das T-Dach des Trägerstücks eine mit dieser zusammen wirkende Innenzahnung trägt. Die Verdrehsicherung ist nicht bei ganz unterschiedlichen Lenkervorbauten verwendbar.

Eine Halterung für Behältnisse an einem Fahrrad ist auch in der DE 39 27 086 A1 angegeben. Bei dieser bekannten Halterung ist an der Lenkstange oder dem Gepäckträger des Fahrrads ein Trägerstück angebracht, an dem ein boxartiges Behältnis bzw. eine Packtasche mittels eines Haltestücks angekoppelt werden kann. Das Haltestück weist dazu ein langgestrecktes Hakenprofil mit einer kreisrunden Verdickung an dem Hakenende auf, um eine Drehachse zu bilden. Unterhalb des Hakenprofils ist ein Verriegelungsbügel vorgesehen, der beim Einschwenken der Box in einen Schließschacht eingreift und darin verriegelt wird. Die Seitenführung der Box übernehmen dabei die seitlichen Schenke des Verriegelungsbügels im Schließschacht. Die Betätigung des Riegels erfolgt durch eine an der Oberseite des Trägerstücks angeordnete Handhabe. Für die seitliche Befestigung der Gepäcktasche am Gepäckträger ist ein Schnapphaken vorgesehen, der eine obere Längsstange des Gepäckträgers unmittelbar übergreift, wobei der Hakenmechanismus aus mehreren getrennten Teilen zusammengesetzt ist. Diese Halterungen sind unter anderem wegen der besonderen Verriegelungsmechanismen relativ aufwendig.

In der DE 40 08 211 A1 ist ein an der Lenkstange befestigbares Trägerstück angegeben, das mit einem an dem Lenkervorbau in Anlage bringbaren Stützabschnitt in Eingriff gebracht ist. Die Festlegung des Behältnisses an dem Trägerstück erfolgt ähnlich wie gemäß der vorgenannten Druckschrift.

Die DE 23 099 A1 zeigt eine Halterung für ein Behältnis in Form eines Drahtkorbes an einem Gepäckträger. Das von der Innenseite des Drahtkorbes eingesetzte Haltestück durchgreift mit einem Schraubansatz das Drahtgitter, und in dem Ansatz ist ein Hakenelement senkrecht zu der Auflagefläche des Haltestücks geführt aufgenommen, das mittels einer Schraube an dem Gepäckträgergestänge festklemmbar ist. Hierdurch ist der Aufwand beim Befestigen und Abnehmen des Drahtkorbes relativ hoch.

Der Erfindung liegt die Aufgabe zugrunde, eine Halterung der eingangs genannten Art bereitzustellen, die im Aufbau und in der Bedienung einfach ist und eine zuverlässige Festlegung des Behältnisses gewährleistet.

Diese Aufgabe wird mit den Merkmalen des Anspruchs 1 gelöst. Hiernach ist also vorgesehen, daß die Schellen an ihrem die Schellen an ihrem von dem Trägerstück beabstandeten, die Lenkstange umschlingenden Innenumfang die Innenzahnung tragen, und daß das die Außenzahnung tragende Bogenstück zwischen dem Lenker und dem den Lenker umschlingenden Innenumfang der Schelle festgelegt ist.

Mit diesen Maßnahmen sind die Verzahnungen unmittelbar unter der Klemmstelle der Schellen miteinander in Eingriff gebracht, so daß sowohl das Bogenstück bzgl. der Lenkstange als auch bzgl. der Schelle bzw. des Trägerstücks eindeutig und stabil in der Lage fixiert ist. Der Aufbau ist dabei einfach, und eine Anpaßbarkeit an sehr unterschiedliche Lenkstangen bzw. Lenkervorbauten ist gewährleistet.

Die Verbindung der Schellen mit dem Trägerstück ist dadurch einfach und stabil, daß das Trägerstück auf seiner dem Haltestück abgewandten Rückseite zum Verbinden der Schellen vier Schenkelaufnahmen aufweist, in die vier Schenkel zweier an der Fahrradlenkstange angeordneten Schellen gesteckt sind, und daß das Trägerstuck und die Schellen mittels durch Schraubenaufnahmen des Trägerstücks in Schraubkanäle der Schenkel eingeführter Schrauben an der Lenkstange zusammen mit dem Bügel festlegbar sind.

Die Ausbildung kann weiterhin derart sein, daß die Schellen zumindest über einen axialen inneren oder äußeren Teilbereich eine Innenzahnung aufweisen, daß die Bogenstücke über eine radial beabstandete Traverse miteinander verbunden sind und daß die Traverse bei in gewünschter Stellung ausgerichtetem Trägerstück an dem Lenkervorbau oder Lenkerschaft gegen ein von dem Behältnis erzeugtes Drehmoment anschlagbar ist.

Eine stabile Festlegung an der Lenkstange wird weiterhin dadurch unterstützt, daß die der Lenkstange zugekehrte Innenfläche der Schellen und/oder der Bogenstücke rutschfest ausgebildet ist.

Ist vorgesehen, daß die Innenzahnung und die Außenzahnung sägezahnförmige Zahnungen mit die Abstützwirkung des Bügels unterstützenden steilen Zahnflanken und zwischen diesen liegenden flachen Zahnflanken aufweisen, so wird auch bei größeren Lasten in dem Behältnis eine erhöhte Verdrehsicherheit geboten.

Bei einer Ausbildung derart, daß die Außenzahnung des Bügels axial ein-oder beidseitig mit Bundabschnitten abgeschlossen ist, zwischen denen die Schelle axial unverschieblich festlegbar ist, und daß ein Bundabschnitt oder beide mittels stegartiger Übergangsstücke mit der Traverse verbunden ist/sind, ist für die Schelle eine eindeutige Lage vorgegeben. Außerdem ist die Traverse stabil an dem Bügel angebracht.

Eine weitere vorteilhafte Ausführungsform besteht darin, daß die Hakenelemente und die Hakenaufnahmen sowie die einander zugekehrten Seiten des Trägerstücks und des Haltestücks derart ausgebildet sind, daß zum Ankoppeln die einander zugekehrten Seiten in Anlage miteinander bringbar sind und anschließend die Festlegung durch eine Verschiebebewegung unter Reib-, Kraft- und/oder Formschluß erfolgt.

Die Hakenelemente und die Hakenaufnahmen sind dabei einfach auf den einander zugekehrten Seiten des Trägerstücks und des Haltestücks ausbildbar, indem die entsprechenden Elemente beispielsweise einstückig an den jeweiligen Elementen angeformt sind. Die Ankopplung des Behältnisses an dem Fahrrad geschieht einfach dadurch, daß das Haltestück auf das Trägerstück gesteckt wird. Das Trägerstück und das Haltestück liegen im angebrachten Zustand mit ihren zugewandten Seiten fest aneinander, so daß auch bei Vibrationen und Schwingungen das Trägerstück und das Haltestück sich nicht relativ zueinander bewegen und eine sichere, erschütterungsfreie Ankopplung zwischen den beiden Teilen gewährleistet ist. Die Maßnahmen eröffnen die Möglichkeit, unterschiedliche Behältnisse, wie z.B. Taschen, Weidenkorb, Drahtkorb, Kunststoffboxen und dgl. mit denselben Adapterelementen an unterschiedlichen Stellen des Fahrrades anzubringen.

Ist vorgesehen, daß das Haltestück plattenartig ausgebildet ist und daß darin die Hakenaufnahmen durch mindestens eine Aussparung und daran vorgesehen Hinterschnitte gebildet sind und daß die Hakenelemente an dem Trägerstück als Vorsprung ausgebildet sind, die in die Aussparung(en) eingreifen, oder daß umgekehrt die Hakenaufnahmen an dem Trägerstück durch mindestens eine Aussparung und daran vorgesehen Hinterschnitte gebildet sind und daß die Hakenelemente an dem Haltestück als Vorsprung ausgebildet sind, die in die Aussparung(en) eingreifen, so ergibt sich die Möglichkeit, das Haltestück an einer geeigneten Wandung des Behältnisses einfach und dauerhaft anzubringen, ohne daß es störend wirkt. Das Behältnis kann dann jederzeit leicht an dem Fahrrad angebracht und von diesem abgenommen werden. Dadurch, daß der Vorsprung mit den Hakenelementen in die Aussparungen eingreift, wird erreicht, daß das Haltestück einfach und genau positioniert an der Trägerplatte durch Verschieben festgelegt werden kann und seitlich unverschiebbar gelagert ist.

Durch die Maßnahme, daß mindestens zwei Hakenelemente an einem gemeinsamen Vorsprung durch Hinterschneiden an den den Hakenaufnahmen entsprechenden Stellen ausgebildet sind und daß der bzw. die Vorsprünge mindestens an die zur Einhängerichtung parallele Begrenzung der Aussparung(en) angepaßt sind, wird diese Wirkung der eindeutigen Festlegung des Haltestücks an dem Trägerstück begünstigt, wobei die Hakenelemente und die Hakenaufnahmen beim Formen einfach ausbildbar sind.

Zum gesicherten Ankoppeln des Haltestücks an dem Trägerstück ist es möglich, die Hakenelemente selbst mit einer Art rastender Vorsprünge zu versehen, so daß eine kraft- und formschlüssige Verbindung zustande kommt. Eine gesicherte Anbringung ist aber auch dadurch auf einfache Weise möglich, daß an dem Trägerstück oder an dem Haltestück ein Rastelement mit Rastfeder und Rastvorsprung vorgesehen ist, das nach Abschluß der Verschiebebewegung in eine an dem Haltestück bzw. an dem Trägerstück vorgesehene Rastaufnahme einschnappt. Durch entsprechende Ausbildung des Rastabsatzes kann dabei das Behältnis mit einem abgestimmten, geeigneten Kraftaufwand von dem Fahrrad gelöst werden, ohne daß ein besonderer Entriegelungsmechanismus nötig ist.

Zum einfachen Aufheben der Rastverbindung kann aber auch vorgesehen sein, daß die Rastfeder über einen Rand des Trägerstücks vorragt und von Hand zum Aufheben der Rastverbindung betätigbar ist.

Eine verstärkte Anbringung des Haltestücks an einem beliebigen Behältnis wird dadurch erzielt, daß das Haltestück mit Hilfe einer Innenplatte an einer zugeordneten Wandung des Behältnisses angebracht ist.

Eine kostengünstige Ausgestaltung der Halterung ergibt sich dadurch, daß das Trägerstück und das Haltestück jeweils als ein Formstück mit den Hakenelementen bzw. den Hakenaufnahmen und ggf. dem Rastelement ausgebildet sind. Dabei müssen nicht mehrere Einzelteile zum Aufbau des Trägerstücks bzw. des Haltestücks zusammengesetzt werden. Eine gute Funktionsfähigkeit ist auf Dauer gegeben.

Eine alternative Abstützung des Trägerstücks besteht darin, daß die beiden Schellen jeweils ein radial abstehendes Verbindungsstück aufweisen, in deren Endbereich eine verstellbare Traverse oder eine feste Traverse mit einer Verstellschraube zum Abstützen an dem Lenkervorbau oder dem Lenkerschaft angeordnet ist.

Eine einfache Diebstahlsicherung für ein an dem Fahrrad angebrachtes Behältnis wird durch die Maßnahme erzielt, daß an dem Haltestück ein Schloßhalter mittels Schrauben oder Rastzapfen festlegbar ist und daß ein in dem Schloßhalter eingesetztes Schloß bei an dem Fahrrad angebrachtem Behältnis mit einem Verriegelungszapfen in eine Verriegelungsöffnung absperrbar eingreift.

Eine Behältnis kann stets einfach an einem Gepäckträger angebracht bzw. davon abgenommen werden, wenn vorgeshen ist, daß das Trägerstück mittels auf der von dem Haltestück abgekehrten Seite anbringbarer Befestigungslaschen auf der Oberseite des Gepäckträgers festklemmbar ist. Das Haltestück kann dabei an Gepäckträger unterschiedlicher Abmessungen und Gestaltungen einfach dadurch angebracht werden, daß die Befestigungslaschen in bzw. parallel zu der Ebene des Trägerstücks in Führungsnuten oder Führungsschlitzen verstellbar und festlegbar geführt sind. Eine stabile Festlegung auch an dickeren Gestängen des Gepäckträgers wird dadurch begünstigt, daß die Befestigungslaschen an ihrem einen Endbereich eine Halteldaue zum Festklemmen an dem Gepäckträgergestänge und an ihrem anderen Endbereich einen Stützabschnitt mit einem Führungsteil sowie einen zwischen den beiden Endbereichen angeordneten Vorsprung zum Aufnehmen einer Schraube aufweisen. Dabei kann die jeweilige Befestigungslasche leicht und eindeutig an die gewünschte Stelle geführt werden, wobei die Halteklaue das Gestänge weitgehend und fest umklammert.

Die Erfindung wird nachfolgend anhand von Ausführungsbeispielen unter Bezugnahme auf die Zeichnungen naher erläutert. Es zeigen:
- Fig. 1: schematisch eine Halterung zum Anbringen eines Behältnisses an einer Lenkstange, mit einem angekoppelten Behältnis,
- Fig. 2: einen Querschnitt der Halterung gemäß Fig. 1,
- Fig. 3A: eine Explosionsdarstellung der Halterung gem. Fig. 1,
- Fig.3B: einen Bügel zum Halten und Abstützen eines Trägerstücks der Halterung, wobei die Schellen und der Bügel gegenüber der Fig. 3A abgewandelt sind,
- Fig. 3C: einen Ausschnitt des in Fig. 3B gezeigten Bügels,
- Fig. 3D: eine Schelle, die mit dem in den Fig. 3B und 3c gezeigten Bügel verwendbar ist,
- Fig. 3E: weitere Schellen und einen weiteren Bügel zum Halten und Abstützen eines Trägerstücks der Halterung, wobei die Schellen und der Bügel gegenüber Fig. 3A abgewandelt sind,
- Fig. 4: ein Trägerstück in einer perspektivischen Ansicht von der Seite des Behältnisses aus und von der Seite der Schellen aus,
- Fig. 5: einen Querschnitt eines auf die Schellen aufgesteckten Trägerstücks mit einem an den Schellen in zwei verschiedenen Winkelpositionen verstellten Bügel,
- Fig. 6A: eine in einem Behältnis anzubringende Innenplatte in perspektivischer Ansicht von außen und von innen,
- Fig. 6B: ein auf der Außenseite eines Behältnisses anzubringendes Haltestück in perspektivischer Ansicht von innen und von außen,
- Fig. 7: einen Querschnitt des in Fig. 6B gezeigten Haltestücks mit einem eingesetzten Schloßhalter,
- Fig. 8: perspektivische Ansichten eines Schloßhalters,
- Fig. 9: eine schematische Darstellung einer Halterung mit einem an einem Gepäckträger angebrachten Trägerstück und einem an einem Behältnis angebrachten Haltestück,
- Fig. 10A: einen Querschnitt, der den Anbringvorgang eines Haltestücks angekoppeltes Haltestück zeigt,
- Fig. 11A: eine Explosionsdarstellung einer Halterung für einen Gepäckträger mit einem boxartigen Behältnis,
- Fig. 11B: eine perspektivische Darstellung der in Fig. 11A gezeigten, mit dem Gepäckträger und dem Behältnis verbundenen Halterung von unten,
- Fig. 12: eine Befestigungslasche für das in Fig. 11 gezeigte Trägerstück,
- Fig. 13A: ein weiteres Ausführungsbeispiel für an einer Lenkstange anzubringende Schellen mit einem Bügel zum Abstützen und
- Fig. 13B: ein weiteres Ausführungsbeispiel für an einer Lenkstange anzubringende Schellen mit einem Bügel zum Abstützen.

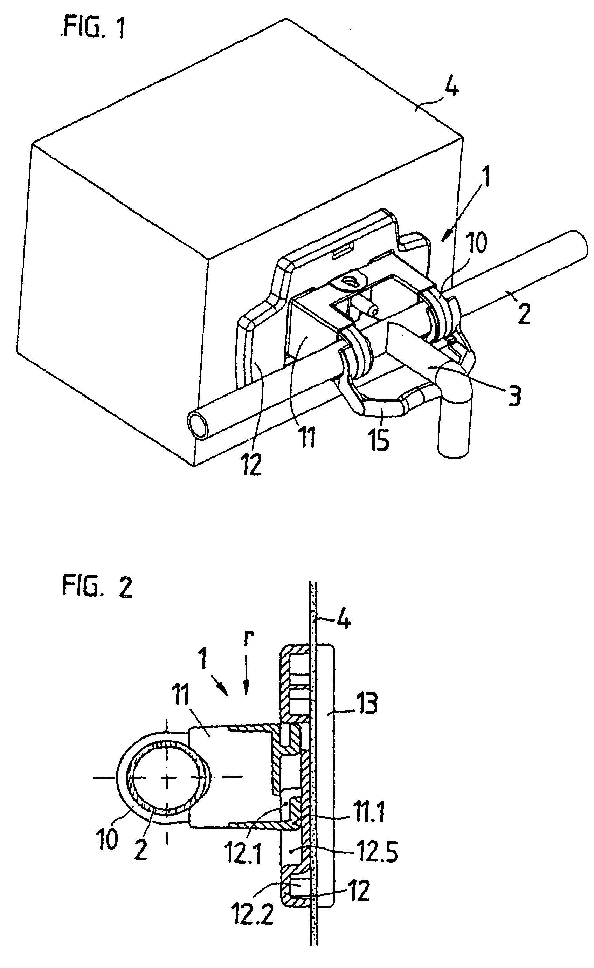

Die Fig. 1 zeigt eine Halterung 1 mit einem an einer Lenkstange 2 angebrachten Trägerstück 11 und einem außen an einem Behältnis 4 angebrachten Haltestück 12. Das Trägerstück 11 ist mittels zweier Schellen 10 an der Lenkstange 2 angebracht und gegen ein von dem Behältnis 4 erzeugtes Drehmoment mittels eines Bügels 15 an der Unterseite eines Lenkervorbaus 3 abgestützt. Ähnlich könnte der Bügel auch an dem Lenkerschaft abgestützt sein.

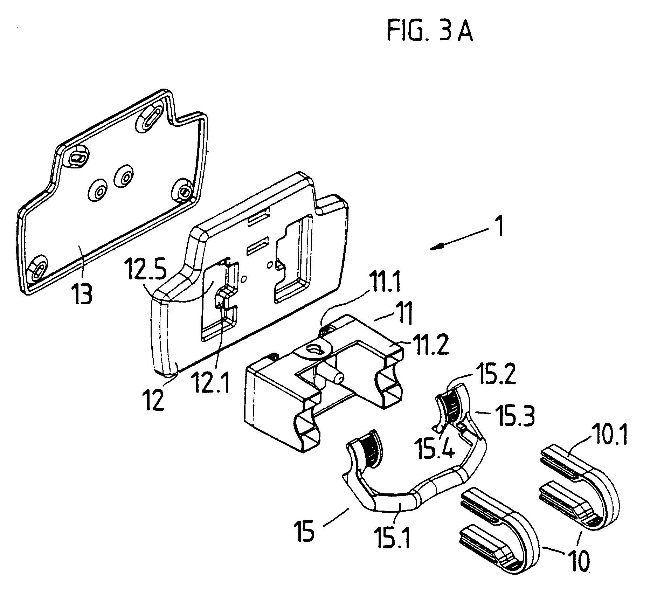

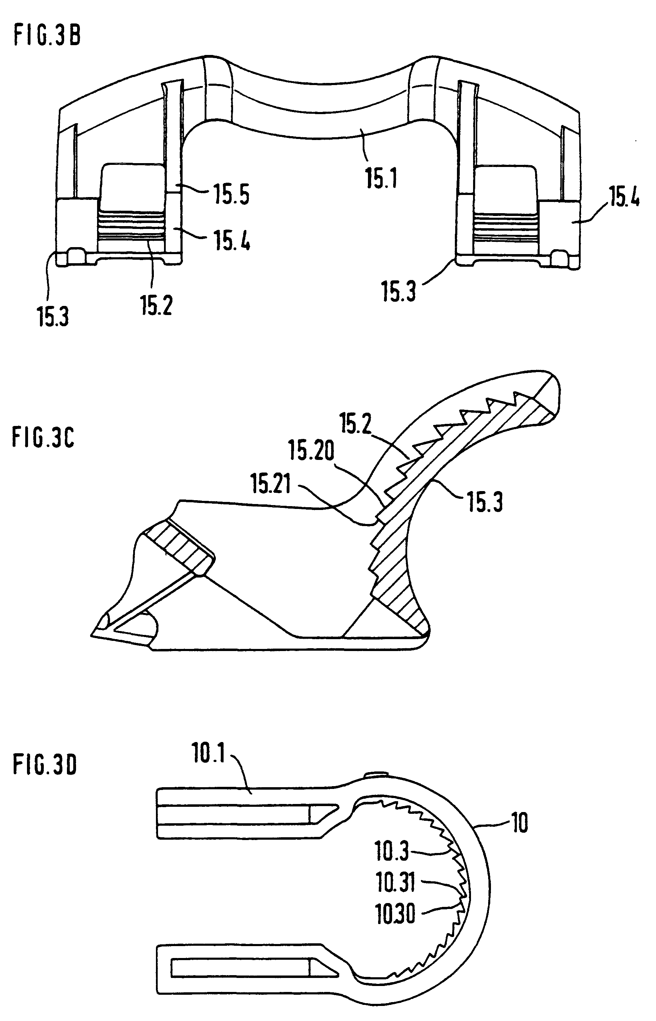

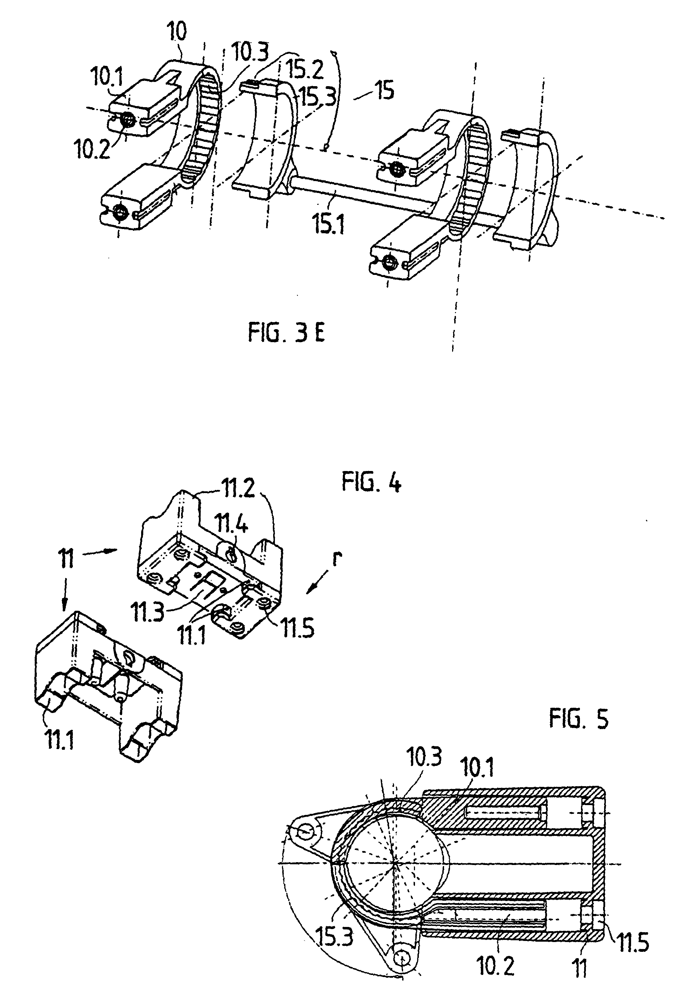

In der Fig. 2 ist der angebrachte Zustand des Behältnisses 4 dargestellt. Das mit einer Innenplatte 13 an einer Wandung des Behältnisses 4 befestigte Haltestück 12 ist dabei mittels taschenartiger Hakenaufnahmen 12.1 in angepaßte, ebenfalls taschenartige Hakenelemente 11.1 des Trägerstücks 11 eingehängt, wobei die Hakenelemente in Aussparungen 12.5 des Haltestücks 12 hineinragen und sich mit ihrer Außenseite an dem Grund der Aussparung 12.5 abstützen. Mit der Innenseite treten die Hakenelemente 11.1 dabei mit der Innenseite der Hakenaufnahmen 12.1 in Kontakt. Die Hakenelemente 11.1 sind dabei reibschlüssig in die Hakenaufnahmen 12.1 eingepaßt, so daß sich das Behältnis auch bei Vibrationen und Schwingungen nicht von dem Trägerstück 11 löst, zumal die Schwerkraft einem Lösen entgegenwirkt. Zum Einhängen wird das Behältnis 4 mit dem Haltestück 12 zunächst an das Trägerstück 11 flach angesetzt und dann in der Einhängerichtung r nach unten geschoben. Die Innenplatte 13 ist mit Schrauben in Schraubendomen 12.2 des Haltestücks 12 festgelegt. Das Trägerstück 11 ist auf Schenkel 10.1 der Schellen 10, die in Fig. 3A und 3B näher gezeigt sind, aufgesteckt und daran verschraubt, so daß die Schellen 10 mit dem Trägerstück 11 fest an der Lenkstange 2 angebracht sind.

Fig. 3A zeigt die an der Lenkstange 2 und dem Behältnis 4 anzubringende Halterung 1 in Explosionsdarstellung. Zwischen der Innenplatte 13 und dem Haltestück 12 wird eine Wandung des Behältnisses 4 fest aufgenommen, während das Trägerstück 11 mit den Schellen 10 an der Lenkstange 2 festgelegt wird, wobei die Schenkel 10.1 in die Schenkelaufnahmen 11.2 gesteckt und die Bogenstücke 15.3 zwischen den Schellen 10 und der Lenkstange 2 verstellbar festgeklemmt sind. Die Bogenstücke 15.3 weisen eine Außenzahnung 15.2 auf, die mit einer Innenzahnung 10.3 der Schellen 10 über deren gesamte Breite zusammenwirken. Die sich über die gesamte Breite der Schellen 10 erstreckende Außenzahnung 15.2 ist beidseitig von Bundabschnitten 15.4 begrenzt, so daß sich eine eindeutige Festlegung des Bügels 15 ergibt. Der mittlere Abschnitt einer Traverse 15.1, mit der sich der Bügel 15 am Lenkervorbau 3 bzw. dem Lenkerschaft abstützt, ist leicht konkav ausgebildet, um eine stabile Anlage zu erzielen.

Die Fig. 3B bis 3D zeigen vergrößerte Darstellungen des Bügels 15 und der Schelle 10. Wie insbesondere aus den Fig. 3C und 3D ersichtlich, haben die Innenzahnung 10.3 der Schelle 10 und die Außenzahnung 15.2 des Bügels 15 sägezahnförmig ausgebildete Zahnflanken, wobei steile Zahnflanken 10.31 bzw. 15.21 einem Verdrehen des Trägerstücks 11 gegen die Abstützung des Bügels 15 an dem Lenkervorbau 3 im festgelegten Zustand entgegenwirken. Zwischen den steilen Zahnflanken 15.21 bzw. 10.31 liegen flachen Zahnflanken 15.20 des Bügels 15 bzw. 10.30 der Schelle 10. Die Außenzahnung 15.2 ist beidseitig von den Bundabschnitten 15.4 begrenzt, so daß die Schelle 10 auch axial unverschiebbar eindeutig festgelegt ist. Beide Bundabschnitte sind hierbei über stegartige Übergangsabschnitte 15.5 mit der Traverse 15.1 einstückig verbunden, wobei die Schelle 10 zwischen den Übergangsabschnitten hindurchgeführt wird und eine stabile Festlegung des Bügels 15 gegenüber dem Trägerstück 11 einerseits und gegenüber der Lenkstange 2 und dem Lenkervorbau 3 andererseits erzielt wird.

Wie aus Fig. 3E ersichtlich ist, weisen die Schellen 10 etwa über die Hälfte ihrer axialen Ausdehnung die Innenzahnung 10.3 auf, in die die Außenzahnung 15.2 des Bogenstücks 15.3 des Bügels 15 eingesetzt werden kann. Beim Festziehen von durch Schraubenaufnahmen 11.5 des Trägerstücks 11 eingeführten und in Schraubkanäle 10.2 der Schenkel 10.1 ragenden Schrauben werden die beiden Bogenstücke 15.3 zwischen der Innenseite der Schellen 10 und der Außenseite der Lenkstange 2 festgeklemmt. Im gelösten Zustand können die Bogenstücke 15.3 in Umfangsrichtung in der Innenzahnung 10.3 der Schellen 10 verstellt werden, bis die Traverse 15.1, die die beiden Bogenstücke 15.3 miteinander verbindet, an dem Lenkervorbau 3 bzw. dem Lenkerschaft abgestützt anliegt. In dieser durch die Schrauben fixierbaren Stellung steht die dem Haltestück 12 zugekehrten Seite des Trägerstücks 11 vorzugsweise senkrecht, kann aber auch in einer geeigneten anderen Winkelstellung ausgerichtet sein, wenn das anzubringende Behältnis 4 dies erfordert. Durch die Abstützung mit der Traverse 15.1 ergibt sich eine stabile Ausrichtung.

Wie Fig. 4 zeigt, sind je zwei in Einhängerichtung r voneinander beabstandete Hakenteile 11.1 an einem jeweiligen Vorsprung durch Hinterschneiden angeformt. Die Vorsprünge können im angebrachten Zustand des Behältnisses 4 beispielsweise seitlich an den entsprechenden Begrenzungen der Aussparung 12.5 anliegen, so daß ein eindeutiger Sitz des Haltestücks 12 an dem Trägerstück 11 sichergestellt und eine seitliche Verschiebung ausgeschlossen ist. Auch wird eine seitliche Verschiebung durch die seitlichen Begrenzungen der taschenartigen Hakenelemente 11.1 unterbunden. Zwischen den Hakenelementen 11.1 ist ein zentrales Rastelement 11.3 vorgesehen, dessen Rastfinger als an dem Trägerstück 11 einstückig angeformte Rastfeder ausgebildet ist, die an ihrem freien Endbereich in eine Rastschräge zum einfachen Einhängen des Haltestücks 12 ausläuft und daran anschließend einen etwas abgeschrägten Rastabsatz aufweist, so daß das Haltestück 12 auch ohne Werkzeug aus der Verrastung gelöst werden kann. Alternativ kann die Rastfeder an einem Randbereich nach außen vorstehen, um von Hand die Rastverbindung zu lösen. Denkbar ist auch ein spezielles Betätigungselement zum Lösen der Rastverbindung.

Etwa mittig auf der Oberseite zwischen Schenkelaufnahmen 11.2 für die Schenke 10.1 ist eine schlüsselförmige Verriegelungsöffnung 11.4 mit einem Verriegelungsschlitz eingebracht, in den ein Verriegelungszapfen eines mit dem Haltestück 12 verbindbaren Schlosses zum diebstahlsicheren Festlegen des Behältnisses 4 sperrend eingreifen kann. Ein Element mit der Verriegelungsöffnung 11.4 kann einstückig angeformt oder separat eingesetzt sein.

In der Fig. 5 ist im Querschnitt das an den Schenkeln 10.1 der Schelle 10 aufgesteckte Trägerstück 11 gezeigt und der Bügel 15 mit der Traverse 15.1 in zwei verschiedenen umfangsseitig versetzten Winkelstellungen dargestellt. Dabei greift die Außenzahnung 15.2 des Bogenstücks 15.3 jeweils in die Innenzahnung der Schellen 10 ein. Die Befestigungsschrauben werden durch die Schraubenaufnahmen 11.5 des Trägerstücks 11 in die Schraubkanäle 10.2 zum Festlegen des Trägerstücks 11 an der Lenkstange 2 eingeführt und darin festgezogen.

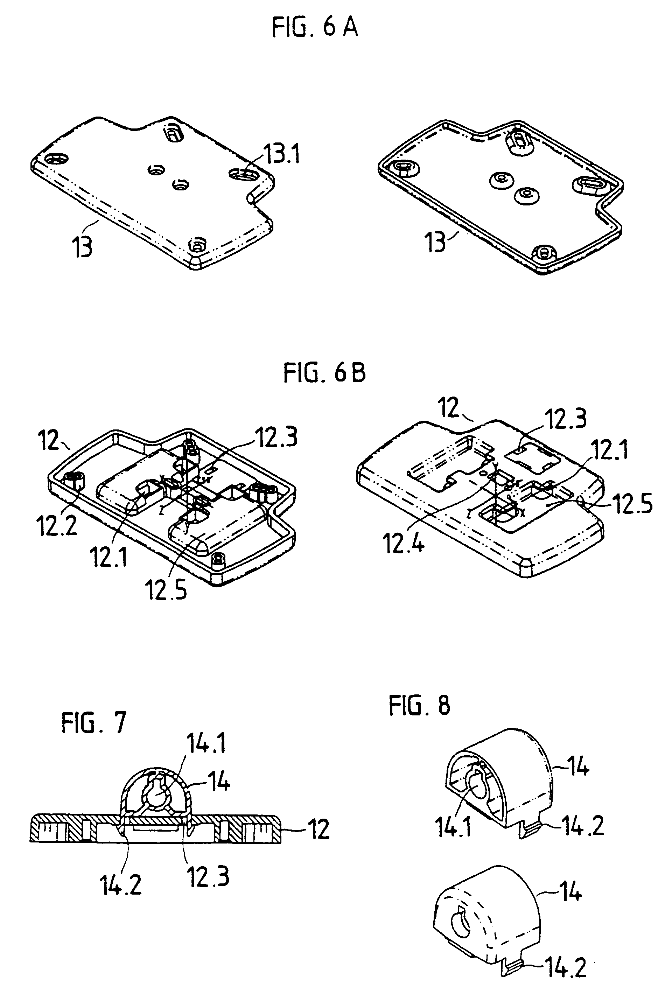

Die Fig. 6A zeigt in perspektivischer Darstellung die Innenplatte 13, die an ihren Eckbereichen diagonal ausgerichtete Schraubendurchführungen 13.1 in Form von Langlöchern aufweist. Durch die Schraubendurchführungen 13.1 geführte Schrauben werden in die Schraubdome 12.2 des Haltestücks 12 durch die Wandung bzw. durch ein Geflecht oder ein Gitter des Behältnisses 4 eingeschraubt, um das Haltestück 12 stabil an dem Behältnis 4 festzulegen. In Fig. 6B sind in der linken Darstellung die Schraubdome 12.2 mit verschiedenen Schraubaufnahmen erkenntlich, so daß die Schrauben in verschiedenen Positionen einsetzbar sind, wenn z.B. Gitterstäbe eines Tragkorbes dies erfordern. In dieser Darstellung sind auch die vorliegend vier Hakenaufnahmen 12.1 sowie die beiden Aussparungen 12.5 von der Rückseite aus erkenntlich. Die entsprechende Vorderseite ist in der rechten Darstellung der Fig. 6B gezeigt. Diese rechte Darstellung zeigt ferner eine Rastaufnahme 12.4, in die das in Fig. 4 gezeigte Rastelement 11.3 im angebrachten Zustand des Behältnisses 4 bzw. des vollständig eingeschobenen Haltestücks 12 eingreift. Ferner zeigt diese Darstellung auch die Anpassung der Aussparungen 12.5 an die Querschnittskontur der Vorsprünge des Trägerstücks 11 mit den vier Hakenelementen 11.1.

In der rechten Darstellung der Fig. 6B ist auch eine Aufnahme mit Durchbrüchen 12.3 gezeigt, in die Rastzapfen 14.2 eines Schloßhalters 14 gemäß Fig. 7 eingreifen, um eine Rastverbindung zwischen dem Schloßhalter 14 und dem Haltestück 12 herauszustellen.

Der Schloßhalter 14 ist in Fig. 8 perspektivisch dargestellt. Ein in eine Schloßaufnahme 14.1 des Schloßhalters 14 eingestecktes Schloß greift in die im Zusammenhang mit Fig. 4 beschriebene Verriegelungsöffnung 11.4 ein und kann darin durch Drehen eines Schlüssels festgelegt werden, so daß das Haltestück 12 mit dem Behältnis 4 diebstahlsicher an dem Trägerstück 11 angebracht ist. Der Schloßhalter 14 kann an dem Haltestück 12 auch angeformt sein. Denkbar ist auch, daß der Schloßhalter an dem Trägerstück 11 und die Verriegelungsöffnung an dem Haltestück 12 vorgesehen sind.

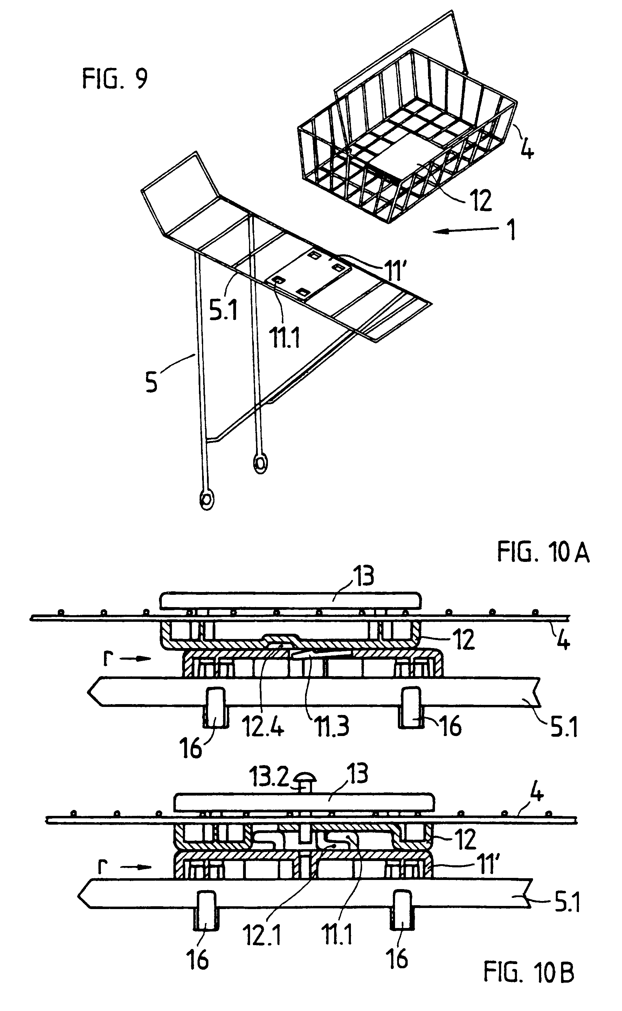

Die Fig. 9 zeigt schematisch eine an einem Gepäckträger 5 anbringbare Halterung 1 mit einem Trägerstück 11' und einem daran ankoppelbaren Haltestück 12. Auf der Oberseite des Trägerstücks 11' sind vier Hakenelemente 11.1 vorgesehen, während auf der Unterseite des Haltestücks 12 entsprechend vier Hakenaufnahmen 12.1 angeordnet sind, die entsprechend den vorstehenden Ausführungen ausgebildet sein können. Alternativ können die Hakenelemente auch an dem Haltestück 12 und die Hakenaufnahmen an dem Trägerstück 11' angeordnet sein; wie es auch für die im Zusammenhang mit der Lenkstangenbefestigung beschriebene Halterung 1 gilt. Als Behältnis 4 ist vorliegend ein Tragekorb aus einem Drahtgitter dargestellt, an dessen Bodenseite das Haltestück 12 angebracht ist. Das Trägerstück 11' ist an einem Gestänge 5.1 des Gepäckträgers 5 festgelegt.

Die Fig. 10A und 10B zeigen zwei verschiedene Querschnitte, aus denen die Ankopplung des Haltestücks 12 an dem Trägerstück 11' ersichtlich ist. Gemäß Fig. 10A ist das Haltestück 12 flach auf dem Trägerstück 11' vor dessen eingehängtem Zustand aufgelegt. Dabei ist das an dem Trägerstück 11' angeformte Rastelement 11.3 nach unten gegen die Federkraft ausgelenkt. Beim Verschieben in Einhängerichtung r kommen dann die Hakenelemente 11.1 und die Rastaufnahmen 12.1 in schlüssige Verbindung miteinander, und das Rastelement greift mit seinem Rastabsatz in die Rastaufnahme 12.4 des Haltestücks 12 ein. Auch hierbei ist das Haltestück 12 aus dem Trägerstück 11' wegen einer leichten Schräge des Rastabsatzes ohne Werkzeug aus dem Tragerstück 11' herausschiebbar. Zum Sichern des angekoppelten Zustandes des Behältnisses 4 kann eine Befestigungsschraube 13.2 durch die Innenplatte 13, die Wandung des Behältnisses 4 und das Haltestück 12 hindurch in eine Aufnahme des Trägerstücks 11' eingeschraubt werden.

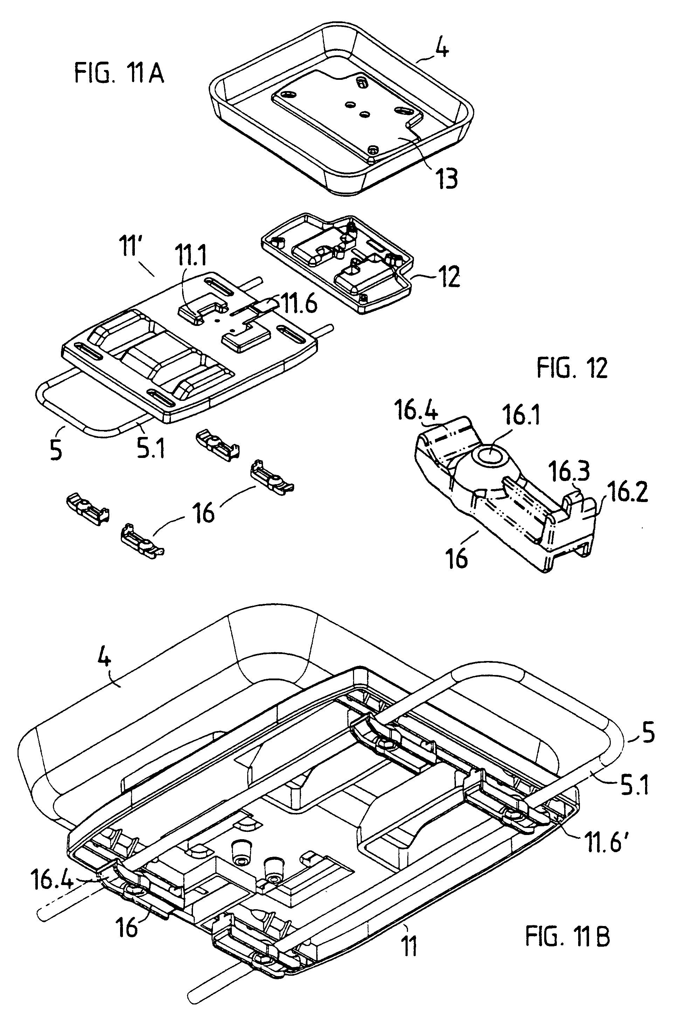

Die Fig. 11A und 11B zeigen die Halterung 11' zum Festlegen an einem Gepäckträger 5 und an einem boxartigen Behältnis 4 perspektivisch einmal in Explosionsdarstellung und zum anderen von unten. Das Haltestück 12 und die Innenplatte 13 sind hierbei gleich ausgebildet, wie bei der Lenkstangen-Halterung. Das Trägerstück 11' ist hingegen als relativ große, plattenartige Auflage ausgebildet, wobei aber der Halteabschnitt auf das Haltestück 12 abgestimmt ist. Die große Auflage ergibt einen guten Halt für das Behältnis 4. Auf diese Weise ist mit wenigen, einfachen Teilen eine vielfältige Befestigungsmöglichkeit geboten.

Wie aus den Fig. 11A und 11B und auch aus den Fig. 10A und 10B weiterhin ersichtlich ist, ist das Trägerstück 11' an dem Längsgestänge 5.1 des Gepäckträgers 5 mittels Befestigungslaschen 16 festgelegt. Eine derartige Befestigungslasche ist in Fig. 12 gezeigt. An dem dem Längsgestänge 5.1 zugekehrten Endbereich ist eine Halteklaue 16.4 angeformt, während an dem gegenüberliegenden Endbereich ein Stützabschnitt 16.2 mit einem Führungsteil 16.3 angeformt ist. Zwischen der Halteklaue 16.4 und dem Stützabschnitt 16.2 ist ein Vorsprung 16.1 ausgebildet, in dem eine Schraube zum Festklemmen des Haltestücks 12 an dem Längsgestänge 5.1 aufgenommen wird. Der Führungsteil 16.3 läßt eine einfache Verschiebung in einer darauf abgestimmten Führung 11.6' beispielsweise in Form eines Schlitzes oder einer Nut zu, während der Stützabschnitt 16.2 im Anschluß an den Führungsteil 16.3 eine Schulter bildet, mit der er an den Flanken der Führung abgestützt ist. Durch den Vorsprung 16. 1 und den Stützabschnitt 16.2 wird erreicht, daß auch bei dickeren Gestängen des Gepäckträgers 5 stets eine weitgehende Umklammerung des Gestänges erhalten wird. Dadurch ist das Haltestück 12 stets sicher festgelegt. Selbstverständlich kann das Haltestück 12 auch an geeigneten Querstreben des Gepäckträgers 5 festgelegt werden.

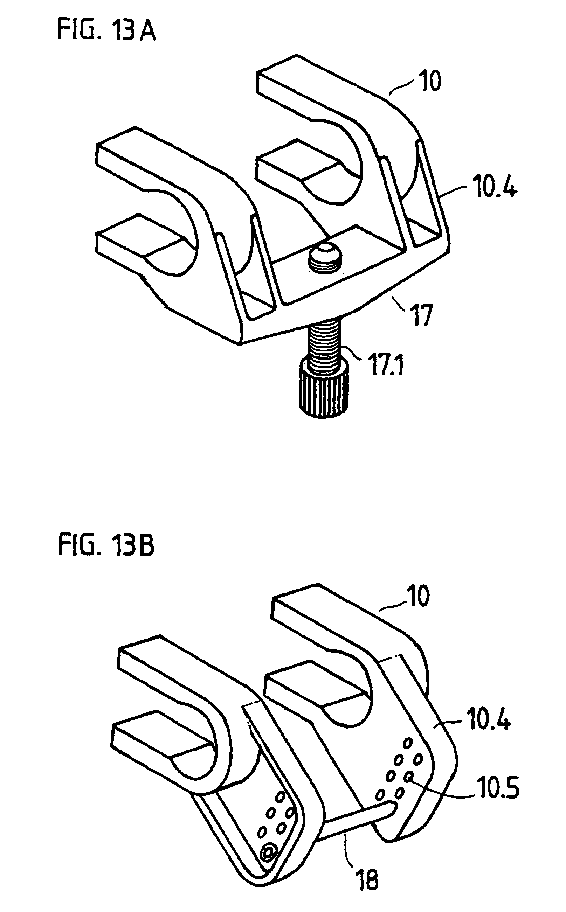

Die Fig. 13A und 13B zeigen weitere Ausführungsbeispiele für die Schellen 10 und den daran angeschlossenen Bügel 15. Gemäß Fig. 13A sind die beiden Schellen 10 jeweils über ein radial abstehendes Verbindungsstück 10.4 einstückig mit einer festen Traverse 17 verbunden, durch die mittig eine Verstellschraube 17.1 zum Abstützen an dem Lenkervorbau 3 oder dem Lenkerschaft eingedreht ist. Gemäß Fig. 13B ist ebenfalls an radial abstehenden Verbindungsstücken 10.4 eine in unterschiedlichen Bohrungen 10.5 anordenbare verstellbare Traverse 18 vorgesehen.

Die beschriebene Halterung 1 kann insbesondere wegen des einstückig herstellbaren Trägerstücks 11, 11' und des daran angepaßten Haltestücks 12 einfach z. B. aus Kunststoff gefertigt werden. Dabei können die Hakenelemente 11.1, die Hakenaufnahmen 12.1, das Rastelement 11.3 sowie die Rastaufnahme 12.4 ohne Schwierigkeiten einstückig angeformt sein. Durch die Abstützung der beiden zueinander gekehrten Flächen des Trägerstücks 11, 11' und des Haltestücks 12 ergibt sich ein guter Halt zwischen dem Tragerstück 11, 11' und dem Haltestück bzw. eine sichere Anbringung des Behältnisses 4 an dem Fahrrad. Insbesondere das Haltestück 12 kann sowohl für die Gepäckträgermontage als auch die Lenkstangenmontage oder auch eine andere geeignete Montage, wie z.B. an der Seite eines Gepäckträgers oder einer geeigneten Stelle des Fahrradrahmens, stets gleich ausgebildet sein und an einer geeigneten Wandung des Behältnisses festgelegt werden.

Bei der Lenkstangenmontage ergibt sich durch die besondere Ausbildung und Festlegung des Bügels an den Schellen eine leicht variierbare und dabei stabile Abstützung.

## Patentansprüche

1. Halterung zum lösbaren Anbringen eines Behältnisses (4) an einem Fahrrad mit einem an der Lenkstange (2) rechts und links von einem Lenkervorbau (3) verstellbar mittels Schellen (10) festlegbaren und an dem Lenkervorbau (3) mittels eines Bügels (15) abstützbaren Trägerstück (11), an dem die Schellen (10) mit ihren freien Enden einsetzbar und verspannbar sind, mit einem mit dem Bügel (15) starr verbundenen Bogenstück (15.3), das eine Außenzahnung (15.2) besitzt, mittels der der Bügel (15) im gelockerten Zustand der Schellen (10) an einer Innenzahnung (10.3) relativ zu dem Trägerstück (11) verstellbar und im festgezogenen Zustand der Schellen (10) unverstellbar festgelegt ist, und mit einem an dem Trägerstück lösbar ankoppelbaren, an dem Behältnis (4) befestigten oder befestigbaren Haltestück (12),
**dadurch gekennzeichnet,**
**daß** die Schellen (10) an ihrem von dem Trägerstück (11) beabstandeten, die Lenkstange (2) umschlingenden Innenumfang die Innenzahnung (10.3) tragen, und
**daß** das die Außenzahnung (15.2) tragende Bogenstück (15.3) zwischen dem Lenker (2) und dem den Lenker (2) umschlingenden Innenumfang der Schelle (10) festgelegt ist.

2. Halterung nach Anspruch 1,
**dadurch gekennzeichnet,**
**daß** das Trägerstück (11) auf seiner dem Haltestück (12) abgewandten Rückseite zum Verbinden der Schellen (10) vier Schenkelaufnahmen (11.2) aufweist, in der vier Schellen (10.1) zweier an der Fahrradlenkstange (2) angeordneter Schellen (10) gesteckt sind, und
**daß** das Trägerstück (11) und die Schellen (10) mittels durch Schraubenaufnahmen (11.5) des Trägerstücks (11) in Schraubkanäle (10.2) der Schenkel (10.1) eingeführter Schrauben an der Lenkstange zusammen mit dem Bügel (15) festlegbar sind.

3. Halterung nach Anspruch 1 oder 2,
**dadurch gekennzeichnet,**
**daß** die Schellen (10) zumindest über einen axialen inneren oder äußeren Teilbereich eine innenzahnung (10.3) aufweisen,
**daß** die Bogenstücke (15.3) über eine radial beabstandete Traverse (15.1) miteinander verbunden sind und
**daß** die Traverse (15.1) bei in gewünschter Stellung ausgerichtetem Trägerstück (11) an dem Lenkervorbau (3) oder Lenkerschaft gegen ein von dem Behältnis (4) erzeugtes Drehmoment anschlagbar ist.

4. Halterung nach einem der Ansprüche 1 bis 3,
**dadurch gekennzeichnet,**
**daß** die der Lenkstange (2) zugekehrte Innenfläche der Schellen (10) und/oder der Bogenstücke (15.3) rutschfest ausgebildet ist.

5. Halterung nach einem der vorhergehenden Ansprüche,
**dadurch gekennzeichnet,**
**daß** die Innenzahnung (10.3) und die Außenzahnung (15.2) sägezahnförmige Zahnungen mit die Abstützwirkung des Bügels (15) unterstützenden steilen Zahnflanken (10.31 bzw. 15.21) und zwischen diesen liegenden flachen Zahnflanken (10.30 bzw. 15.20) aufweisen.

6. Halterung nach einem der vorhergehenden Ansprüche,
**dadurch gekennzeichnet,**
**daß** die Außenzahnung (15.2) des Bügels (15) axial ein- oder beidseitig mit Bundabschnitten (15.4) abgeschlossen ist, zwischen denen die Schelle (10) axial unverschieblich festlegbar ist, und
**daß** ein Bundabschnitt (15.4) oder beide mittels stegartiger Übergangsstücke (15.5) mit der Traverse (15.1) verbunden ist/sind.

7. Halterung nach einem der vorhergehenden Ansprüche,
**dadurch gekennzeichnet,**
**daß** mindestens zwei in Einhängerichtung (r) voneinander beabstandete Hakenelemente (12.1) und mindestens zwei entsprechende angepaßte, in Einhängerichtung (r) voneinander beabstandete Hakenaufnahmen (11.1) an dem Trägerstück (11, 11') bzw. an dem Haltestück (12) angeordnet sind und
**daß** die Hakenelemente (11.1) und die Hakenaufnahmen (12.1) sowie die einander zugekehrten Seiten des Trägerstücks (11,11') und des Haltestücks (12) derart ausgebildet sind, daß zum Ankoppeln die einander zugekehrten Seiten in Anlage miteinander bringbar sind und anschließend die Festlegung durch eine Verschiebebewegung unter Reib-, Kraft- und/oder Formschluß erfolgt.

8. Halterung nach Anspruch 7,
**dadurch gekennzeichnet,**
**daß** das Haltestück (12) plattenartig ausgebildet ist und daß darin die Hakenaufnahmen (12.1) durch mindestens eine Aussparung (12.5) und daran vorgesehene Hinterschnitte gebildet sind und
**daß** die Hakenelemente (11.1) an dem Trägerstück (11,11') als Vorsprung ausgebildet sind, die in die Aussparung(en) (12.5) eingreifen, oder
**daß** umgekehrt die Hakenaufnahmen an dem Trägerstück (11,11') durch mindestens eine Aussparung und daran vorgesehene Hinterschnitte gebildet sind und
**daß** die Hakenelemente an dem Haltestück (12) als Vorsprung ausgebildet sind, die in die Aussparung(en) eingreifen.

9. Halterung nach Anspruch 8,
**dadurch gekennzeichnet,**
**daß** mindestens zwei Hakenelemente (11.1) an einem gemeinsamen Vorsprung durch Hinterschneiden an den den Hakenaufnahmen (12.1) entsprechenden Stellen ausgebildet sind und
**daß** der bzw. die Vorsprünge mindestens an die zur Einhängerichtung (r) parallele Begrenzung der Aussparung(en) (12.5) angepaßt sind.

10. Halterung nach einem der Ansprüche 7 bis 9,
**dadurch gekennzeichnet,**
**daß** an dem Tragerstück (11) oder an dem Haltestück (12) ein Rastelement (11.3) mit Rastfeder (11.6) und Rastvorsprung vorgesehen ist, das nach Abschluß der Verschiebebewegung in eine an dem Haltestück (12) bzw. an dem Trägerstück (11) vorgesehene Rastaufnahme (12.4) einschnappt.

11. Halterung nach Anspruch 10,
**dadurch gekennzeichnet,**
**daß** die Rastfeder (11.6) über einen Rand des Trägerstücks (11,11') vorragt und von Hand zum Aufheben der Rastverbindung betätigbar ist.

12. Halterung nach einem der vorhergehenden Ansprüche,
**dadurch gekennzeichnet,**
**daß** das Haltestück (12) mit Hilfe einer Innenplatte (13) an einer zugeordneten Wandung des Behältnisses (4) angebracht ist.

13. Halterung nach einem der vorhergehenden Ansprüche,
**dadurch gekennzeichnet,**
**daß** das Trägerstück (11,11') und das Haltestück (12) jeweils als ein Formstück mit den Hakenelementen (11.1) bzw. den Hakenaufnahmen (12.1) und ggf. dem Rastelement (11.3) ausgebildet sind.

14. Halterung nach einem der vorhergehenden Ansprüche,
**dadurch gekennzeichnet,**
**daß** an dem Haltestück (12) ein Schloßhalter (14) mittels Schrauben oder Rastzapfen (14.2) festlegbar ist und
**daß** ein in dem Schloßhalter (14) eingesetztes Schloß bei an dem Fahrrad angebrachtem Behältnis (4) mit einem Verriegelungszapfen in eine Verriegelungsöffnung (11.4) absperrbar eingreift.

15. Halterung nach einem der Ansprüche 1 bis 8,
**dadurch gekennzeichnet,**
**daß** das Trägerstück (11) mittels auf der von dem Haltestück (12) abgekehrten Seite anbringbarer Befestigungslaschen (16) auf der Oberseite eines Gepäckträgers (5) festklemmbar ist.

16. Halterung nach Anspruch 15,
**dadurch gekennzeichnet,**
**daß** die Befestigungslaschen (16) in bzw. parallel zu der Ebene des Trägerstücks (11) in Führungsnuten oder Führungsschlitzen (11.6') verstellbar und festlegbar geführt sind.

17. Halterung nach Anspruch 15 oder 16,
**dadurch gekennzeichnet,**
**daß** die Befestigungslaschen (16) an ihrem einen Endbereich eine Halteklaue (16.4) zum Festklemmen an dem Gepäckträgergestänge und an ihrem anderen Endbereich einen Stützabschnitt (16.2) mit einem Führungsteil (16.3) sowie einen zwischen den beiden Endbereichen angeordneten Vorsprung (16.1) zum Aufnehmen einer Schraube aufweisen.

## Claims

1. Holder for detachably mounting a container (4) on a bicycle, having a carrier member (11) which is displaceably securable on the handlebar (2) by means of clips (10) on the right and left of a handlebar projection (3) and is supportable on the handlebar projection (3) by means of a clamp (15), the clips (10) being insertable and clampable with their free ends on said carrier member, an arcuate member (15.3) which is rigidly connected to the clamp (15) and has an outer serration (15.2), by means of which the clamp (15) is displaceably secured on an inner serration (10.3) relative to the carrier member (11) when the clips (10) are in their slack state and is non-displaceably secured when the clips (10) are in their tightened state, and a retaining member (12) which is detachably connectable to the carrier member and is secured or securable on the container (4), **characterised in that** the clips (10) are provided with the inner serration (10.3) on their inner circumference, which is spaced from the carrier member (11) and surrounds the handlebar (2), and **in that** the arcuate member (15.3), provided with the outer serration (15.2), is secured between the handlebar (2) and the inner circumference of the clip (10) surrounding the handlebar (2).

2. Holder according to claim 1, **characterised in that** the carrier member (11) includes four arm receivers (11.2) on its rear side remote from the retaining member (12) for connecting the clips (10), four arms (10.1) of two clips (10), which are disposed on the bicycle handlebar (2), being inserted into said receivers, and **in that** the carrier member (11) and the clips (10) are securable on the handlebar together with the clamp (15) by means of screws introduced into screw channels (10.2) of the arms (10.1) through screw receivers (11.5) of the carrier member (11).

3. Holder according to claim 1 or 2, **characterised in that** the clips (10) include an inner serration (10.3), at least over an axial internal or external section, **in that** the arcuate members (15.3) are interconnected via a radially spaced cross-piece member (15.1), and **in that** the cross-piece member (15.1) can abut against the handlebar projection (3) or handlebar shaft in opposition to a torque generated by the container (4) when the carrier member (11) is aligned in the desired position.

4. Holder according to one of claims 1 to 3, **characterised in that** the internal surface of the clips (10) and/or of the arcuate members (15.3) facing the handlebar (2) is designed to be non-slip.

5. Holder according to one of the preceding claims, **characterised in that** the inner serration (10.3) and the outer serration (15.2) include sawtooth-like serrations having steeply angled tooth flanks (10.31 or respectively 15.21), which assist the supporting action of the clamp (15), and gently angled tooth flanks (10.30 or respectively 15.20) lying between said steeply angled tooth flanks.

6. Holder according to one of the preceding claims, **characterised in that** the outer serration (15.2) of the clamp (15) is axially terminated at one or both sides with collar portions (15.4), between which the clip (10) is axially non-displaceably securable, and **in that** one or both collar portion(s) (15.4) is or are connected to the cross-piece member (15.1) by means of web-like transitional members (15.5).

7. Holder according to one of the preceding claims, **characterised in that** at least two hook elements (11.1), which are spaced from each other when viewed with respect to the mounting direction (r), and at least two correspondingly adapted hook receivers (12.1), which are spaced apart from each other when viewed with respect to the mounting direction (r), are disposed on the carrier member (11, 11') or respectively on the retaining member (12), and **in that** the hook elements (11.1) and the hook receivers (12.1) as well as the sides of the carrier member (11, 11') and of the retaining member (12) facing each other are configured in such a manner that, for coupling purposes, the sides facing each other can be brought into abutment with each other and, subsequently, the securement is effected by a displacement movement with friction-locking, force-locking and/or form-locking.

8. Holder according to claim 7, **characterised in that** the retaining member (12) has a plate-like configuration, and **in that** the hook receivers (12.1) are formed in said retaining member by at least one aperture (12.5) and undercut portions provided thereon, and **in that** the hook elements (11.1) on the carrier member (11, 11') are configured as projections which engage in the aperture(s) (12.5), or **in that**, conversely, the hook receivers are formed on the carrier member (11, 11') by at least one aperture and undercut portions provided thereon, and **in that** the hook elements on the carrier member (12) are configured as projections which engage in the aperture(s).

9. Holder according to claim 8, **characterised in that** at least two hook elements (11.1) are provided on a common projection by undercutting at the locations corresponding to the hook receivers (12.1), and **in that** the projection or respectively the projections is or are adapted at least to the boundary of the aperture(s) (12.5) parallel to the mounting direction (r).

10. Holder according to one of claims 7 to 9, **characterised in that** a locking element (11.3), having a locking spring (11.6) and a locking projection, is provided on the carrier member (11) or on the retaining member (12), said locking element snapping into a locking receiver (12.4), which is provided on the retaining member (12) or respectively on the carrier member (11), on completion of the displacement movement.

11. Holder according to claim 10, **characterised in that** the locking spring (11.6) protrudes beyond one edge of the carrier member (11, 11') and is manually actuatable to release the locking connection.

12. Holder according to one of the preceding claims, **characterised in that** the carrier member (12) is mounted on an associated wall of the container (4) by means of an internal plate (13).

13. Holder according to one of the preceding claims, **characterised in that** the carrier member (11, 11') and the retaining member (12) are each configured as a shaped part having the hook elements (11.1) or respectively the hook receivers (12.1) and optionally the locking element (11.3).

14. Holder according to one of the preceding claims, **characterised in that** a lock holder (14) is securable on the retaining member (12) by means of screws or locking pins (14.2), and **in that** a lock, which is inserted in the lock holder (14), closeably engages in a fastening opening (11.4) with a fastening pin when a container (4) is mounted on the bicycle.

15. Holder according to one of claims 1 to 8, **characterised in that** the carrier member (11) is securely clampable on the upper surface of a luggage carrier (5) by means of securing lugs (16), which are mountable on the side remote from the retaining member (12).

16. Holder according to claim 15, **characterised in that** the securing lugs (16) are displaceably and securably guided in guide grooves or guide slots (11.6') in or respectively parallel to the plane of the carrier member (11).

17. Holder according to claim 15 or 16, **characterised in that** the securing lugs (16) include, on one of their end regions, a retaining claw (16.4) for secure clamping on the luggage carrier rod assembly and, on their other end region, a supporting portion (16.2) with a guide member (16.3), as well as including a projection (16.1), which is disposed between the two end regions, for receiving a screw.

## Revendications

1. Système de fixation permettant de fixer de manière amovible un récipient (4) sur une bicyclette, le système de fixation comportant une pièce de support (11) qui, au moyen de colliers de serrage (10), peut être fixée de manière réglable au guidon (2), à gauche et à droite d'une potence de guidon (3), cette pièce de support pouvant s'appuyer sur la potence de guidon (3) par l'intermédiaire d'un étrier (15), dans cette pièce pouvant être insérés les bouts libres de colliers de serrage (10), et les colliers pouvant y être serrés, le système de fixation comportant une pièce cintrée (15.3) reliée de manière rigide à l'étrier (15), cette pièce présentant un crantage extérieur (15.2) au moyen duquel l'étrier peut être fixé de manière réglable par rapport à la pièce de support (11) avant serrage des colliers (10), et fixé de manière non réglable après serrage des colliers (10), le système de fixation comportant une pièce de fixation (12) pouvant être couplée de manière amovible avec la pièce de support, cette pièce étant fixée ou pouvant être fixée au récipient (4), le système de fixation étant **caractérisé**
**en ce que** les colliers de serrage (10) comportent, sur leur partie intérieure qui enserre le guidon (2), à distance de la pièce de support (11), le crantage intérieur (10.3) et en ce que la pièce cintrée (15.3) comportant le crantage extérieur (15.2) est fixée entre le guidon et la partie intérieure du collier (10) qui enserre le collier (2).

2. Système de fixation suivant la revendication 1,
**caractérisé**
**en ce que** la pièce de support (11) présente, à l'arrière, du côté opposé à celui de la pièce de fixation (12), aux fins de la fixation des colliers de serrage (10), quatre logements (11.2), dans lesquels sont enfichés les quatre branches (10.1) de deux colliers de serrage (10) attachés au guidon (2) de la bicyclette, et
**en ce que** la pièce de support (11) et les colliers de serrage (10) peuvent être fixés au guidon, conjointement avec l'étrier (15), au moyen de vis passées à travers des logements pour vis (11.5) de la pièce de support (11) dans les trous de vis (10.2) des branches (10.1).

3. Système de fixation suivant la revendication 1 ou la revendication 2,
**caractérisé**
**en ce que** les colliers de serrage (10) présentent un crantage intérieur (10.3) sur au moins un secteur axial partiel intérieur ou extérieur,
**en ce que** les pièces cintrées (15.3) sont reliées entre elles par une traverse (15.1) placée en direction radiale, à une certaine distance, et
**en ce que** la traverse (15.1) peut, lorsque la pièce de support est mise dans la position désirée, venir buter sur la potence de guidon (3) ou la tige du guidon, aux fins de s'opposer à un couple de rotation engendré par le récipient (4).

4. Système de fixation suivant l'une quelconque des revendications de 1 à 3,
**caractérisé**
**en ce que** la surface intérieure des colliers de serrage (10) et/ou des pièces cintrées (15.3) qui est tournée vers le guidon (2) est à l'abri du glissement.

5. Système de fixation suivant l'une quelconque des revendications précédentes,
**caractérisé**
**en ce que** le crantage intérieur (10.3) et le crantage extérieur (15.2) présentent des crans en dents de scie à forte pente (10.31 ou 15.21) qui concourent au soutien de l'étrier (15), ces crans alternant avec des crans en dents de scie à faible pente (10.30 ou 15.20).

6. Système de fixation suivant l'une quelconque des revendications précédentes,
**caractérisé**
**en ce que** le crantage extérieur (15.2) de l'étrier (15) est limité, en direction axiale, d'un seul côté ou des deux côtés, par des épaulements latéraux (15.4) entre lesquels les colliers de serrage peuvent être fixés, à l'abri de tout glissement en direction axiale, et
**en ce qu'**un des épaulements latéraux (15.4), ou les deux, est/sont relié(s) à la traverse (15.1) au moyen de pièces de transition (15.5) présentant la forme de nervures.

7. Système de fixation suivant l'une quelconque des revendications précédentes,
**caractérisé**
**en ce qu'**au moins deux éléments en forme de crochets (12.1), placés, en direction d'accrochage (r), à une certaine distance l'un de l'autre, ainsi que deux logements pour crochets (11.1) correspondants, de forme appropriée, placés, en direction d'accrochage (r), à une certaine distance l'un de l'autre, sont disposés sur la pièce de support (11,11') et/ou sur la pièce de fixation (12) et
**en ce que** les éléments en forme de crochets (11.1) et les logements pour crochets (12.1), ainsi que les côtés de la pièce de support (11, 11') et de la pièce de fixation (12) qui se font face sont d'une forme telle que, pour leur accouplement, les côtés qui se font face peuvent être mis en contact, la fixation s'effectuant ensuite au moyen d'un déplacement latéral par un verrouillage se faisant à frottement, à force et/ou à similarité de formes.

8. Système de fixation suivant la revendication 7,
**caractérisé**
**en ce que** la pièce de fixation (12) est en forme de plaque et
**en ce que** les logements pour crochets (12.1) y sont formés au moyen d'au moins un évidement (12.5) et des dépouilles qui y sont prévues et
**en ce que** des éléments en forme de crochets (11.1) font saillie sur la pièce de support (11,11'), ces éléments s'engageant dans l'/les évidement(s) (12.5) ou, qu'à l'inverse, les logements crochets sont formés à la pièce de support (11, 11') au moyen d'au moins un évidement et de dépouilles qui y sont prévues et en ce que les éléments en forme de crochets font saillie sur la pièce de fixation (12), ces crochets s'engageant dans 1'/les évidement(s).

9. Système de fixation suivant la revendication 8,
**caractérisé**
**en ce qu'**au moins deux éléments en forme de crochets (11.1) sont formés sur une saillie commune grâce à une dépouille pratiquée aux endroits correspondants à ceux des logements de crochets (12.1) et
**en ce que** la/les saillie(s) sont adaptées au moins à celle de l'évidement ou des évidements 1'/les évidemment(s) qui est/sont parallèle(s) à la direction d'accrochage (r).

10. Système de fixation suivant l'une quelconque des revendications 7 à 9,
**caractérisé**
**en ce qu'**il est prévu sur la pièce de support (11) ou sur la pièce de fixation (12), un élément d'encliquetage (11.3) comportant une lame d'encliquetage (11.6) et une butée d'encliquetage, cet élément s'encliquetant en fin de mouvement de déplacement dans un logement d'encliquetage (12.4) prévu dans la pièce de fixation (12) ou dans la pièce de support (11).

11. Système de fixation suivant la revendication 10,
**caractérisé**
**en ce que** la lame d'encliquetage (11.6) dépasse d'un bord de la pièce de support (11, 11') et peut, aux fins de défaire la liaison d'encliquetage, être manipulée à la main.

12. Système de fixation suivant l'une quelconque des revendications précédentes,
**caractérisé**
**en ce que** la pièce de support (12) est fixée au moyen d'une plaque intérieure (13) à une paroi correspondante du récipient (4).

13. Système de fixation suivant l'une quelconque des revendications précédentes,
**caractérisé**
**en ce que** la pièce de support (11, 11') et la pièce de fixation (12) sont chacune des pièces moulées comportant les éléments en forme de crochets (11.1) ou les logements pour crochets (12.1) et, le cas échéant, l'élément d'encliquetage (11.3).

14. Système de fixation suivant l'une quelconque des revendications précédentes,
**caractérisé**
**en ce que**, à la pièce de fixation (12) peut être fixé au moyen de vis ou de tenons encliquetables (14.2) un porte-serrure (14) et
**en ce qu'**une serrure placée dans le porte-serrure (14) pénètre au moyen d'un pêne de verrouillage dans une ouverture de verrouillage (11.4).

15. Système de fixation suivant l'une quelconque des revendications précédentes,
**caractérisé**
**en ce que** la pièce de support (11) peut être fixée à la face supérieure d'un porte-bagages au moyen de pattes de serrage (16) pouvant être placées du côté opposé à celui de la pièce de fixation (12).

16. Système de fixation suivant la revendication 15,
**caractérisé**
**en ce que** les pattes de fixation (16) sont guidées, et peuvent être réglées ou fixées dans des rainures ou des fentes de guidage (11.6'), dans le plan de la pièce de support (11) ou parallèlement au plan de celle-ci.

17. Système de fixation suivant la revendication 15 ou 16,
**caractérisé**
**en ce que** les pattes de fixation (16) présentent à l'une de leurs extrémités une griffe de maintien (16.4) destinée à sa fixation aux barreaux du porte-bagages, et qu'elles présentent à leur autre extrémité un élément de soutien (16.2) comportant un tenon de guidage (16.3) ainsi qu'une excroissance (16.1) disposée entre les deux extrémités, cette excroissance étant destinée à recevoir une vis.
